# EUROPEAN PATENT SPECIFICATION

(11) **EP 1 121 836 B1**
(45) Date of publication and mention of the grant of the patent: **28.02.2007**
(21) Application number: 00953318.3
(22) Date of filing: 14.08.2000
(51) Int. Cl.: H05B 3/26

(54) **THICK FILM HEATER**
DICKSCHICHT HEIZELEMENT
DISPOSITIF CHAUFFANT A COUCHE EPAISSE

(30) Priority: 13.08.1999 GB 9919204
(43) Date of publication of application: 08.08.2001
(73) Proprietor: STRIX LIMITED, Ronaldsway, Isle of Man IM9 2RG (GB)
(72) Inventor: MOUGHTON, Colin Peter, Douglas, Isle of Man IM2 3LD (GB)
(74) Representative: Samuels, Adrian James
(86) International application number: PCT/GB2000/003138
(87) International publication number: WO 2001/013681

(56) References cited:
- GB-A- 2 322 273
- US-A- 5 793 929

## Description

This invention relates to electric heaters of the type known in the art as thick film heaters and particularly, but not exclusively, to thick film heaters forming or forming a part of, the base of a liquid heating vessel.

Thick film heaters typically comprise a metallic substrate e.g. stainless steel onto which is fired an insulating layer typically of ceramics or glass. An electrically conductive ink is then applied to the insulating layer in the form of a resistive track or series of tracks. Finally an overglaze is applied to prevent oxidation of the track and also in some circumstances to provide electrical insulation from the track.

It is nowadays becoming increasingly common to use thick film heaters to form the base or part of the base of liquid heating vessels e.g. jug kettles. Such heaters are preferred in these applications over the more traditional fully immersed sheathed elements. This is because firstly, thick film heaters generally have a planar liquid heating face and are easier to clean. Secondly, higher powers are achievable and thus faster boil times. Also, the planar surface of the thick film heater gives a more aesthetically pleasing appearance than the sheathed elements mentioned above.

US 5 793 929 discloses a thick film immersion heater.

However particular care and special precautions are necessary with thick film heaters in order to ensure that they operate safely. This is because thick film heaters typically have a low thermal capacity compared to sheathed elements but a high power density. Whilst this is an advantage when heating liquid as it enables the liquid to be heated rapidly, it means that should a liquid heating vessel containing a thick film heater be switched on dry or be allowed to boil dry, the heater will rise in temperature extremely rapidly and thereby attain very high temperatures.

It is known that, particularly when thick film heaters are switched on dry, micro-cracking of the insulating layer can occur. These micro-cracks compromise the electrical insulation between the substrate and the tracks, causing the heater to fail standard insulation tests such as a 1500V flash test as is presently required to meet European safety requirements. Steps to avoid this micro-cracking are therefore necessary.

To avoid the problems associated with micro-cracking, it has been proposed in WO 98/03038 to form a thick film heater during manufacture into a dished configuration with a concavity on the side of the heater supporting the insulation layer. This is said to be in order to place this layer under a permanent state of compression. Whilst this solution has had some success in preventing micro-cracking, increases manufacturing costs since it requires an extra step which must be carried out once the heating track has been applied since with present techniques the track must be applied to a flat surface.

The Applicant has realised however that micro-cracking is caused by excessive tensile strain in the insulating layer caused by expansion of the substrate to which it is adhered.

In accordance with the invention there is provided a heater as claimed in claim 1.

The Applicant has recognised that, particularly under dry switch-on conditions, the face of the substrate upon which the heating track is mounted (via the insulating layer) rises in temperature more rapidly than the temperature of the opposite face - i.e. the face which would normally be in contact with the liquid to be heated. This introduces stress into the substrate since its two faces are trying to expand at different rates. In the absence of any constraint, this stress causes the substrate to bow with its heated face outermost, thereby straining the insulating layer and causing micro-cracks.

The Applicant has recognised that the tensile strain in the insulating layer is directly dependent upon temperature and therefore that such tensile strain may be reduced simply by reducing temperature.

The Applicant has further recognised that the for micro-cracking to occur in a thick film heater can be reduced by deliberately varying the power density of the heater track across the heater. In accordance with the invention, the propensity of a thick film heater to suffer from micro-cracking is reduced without having to reduce the total power output or increase the surface area of the heater as compared to a standard thick film heater having a uniform power density distribution.

The optimal distribution of power density across the heater will depend on its geometry - more specifically which, if any, parts of the metallic substrate are the stiffest and therefore will give rise to the least tensile strain for a given change in temperature.

In accordance with the invention the distribution of power density is arranged so that the power density in the peripheral region of the heater is higher than at least a radially intermediate region thereof. Most preferably the maximum power density is provided at the periphery of the heated area of the heater. This is advantageous since the portion of the metallic substrate outward from the periphery of the track is not heated directly and so acts as a heat sink for the peripheral portion of the track. This allows the peripheral portion of the track to have the greatest power density for a given maximum temperature.

In preferred embodiments the invention provides a thick film heater having a generally planar metallic substrate, an electrically insulating layer on said substrate and a resistive heating track applied to said insulating layer, said heating track being arranged such that the power density thereof is higher in a peripheral region of the heater than in a radially more inner region, whereby in use, the temperature of the said inner region remains at a lower temperature than the peripheral region.

Looking at this another way, by re-distributing the power density towards the periphery of the heater (as compared to a standard uniform power density distribution), the periphery of the metallic substrate is caused to expand more than the central portion, thereby introducing a hoop stress into the substrate which acts at least partially to counter the bowing stress caused by the temperature gradient across its thickness. The radially more inner regions of the substrate are effectively pulled taut, to minimise the strain in those regions.

Although the region of the metallic substrate provided with heater track is generally planar, preferably it is formed with stiffening means at the edge thereof. This allows the distribution described above to be exaggerated since by virtue of being stiffer, a larger stress is required to produce the same strain. Under such circumstances it is therefore preferred that the distribution of power density is such that the peripheral portion of the track runs at the maximum temperature compared to the rest of the track or at least a radially intermediate region thereof. The heating track is arranged such that a peripheral portion of the track has a sufficiently high power density that in the event that the heater is energised without being in contact with liquid, the temperature of said peripheral portion will be greater than a radially intermediate portion of the heater.

By skewing the power density distribution further towards the periphery such that it runs at an elevated temperature as compared to the radially intermediate portion, the benefits achieved in accordance with the invention are enhanced since the overall power of the heater may be increased further without micro-cracking.

Differential power density across the heater could be achieved by applying electrically conductive ink in different thicknesses, i.e. applying a thinner layer at the periphery and a thicker layer inwardly of the periphery. Alternatively an ink of different resistivity could be used for some parts of the track. Both of these methods however would give rise to significantly increased manufacturing costs. Preferably therefore the variation in power density is achieved by adjusting the widths of the track portions, i.e. making the portion of the track at the periphery narrower than the radially intermediate portion so that the peripheral track has a higher resistance per unit length and therefore a higher power density.

Many different power density and thus temperature profiles are possible that exhibit the advantageous features of the invention. For example the power density could decrease continuously from the periphery of the heater to its centre. Alternatively the power density could decrease from the periphery to the radially intermediate region of the heater and then remain at a constant level into the centre of the heater.

Preferably, however, the power density decreases from the periphery to the radially intermediate region and increases again towards the centre of the heater. This second local maximum in power density is advantageous since it increases the overall power of the heater as a whole as compared to a similar heater with a continuous decline in power density, but can be arranged so as not to give rise to the possibility of micro-cracking in this region. The central region of the plate can tolerate a greater power density than the radially intermediate region without micro-cracking since it is cooled by the very centre of the heater which does not have any heating track applied to it.

In the preferred embodiment of the invention, the track comprises a series of concentric track rings each extending substantially around the plate, preferably with end portions of the tracks connected by low resistance printed bars, e.g. of silver.

Most preferably the heater is circular.

An exemplary embodiment of the present invention will now be described by way of example only with reference to the accompanying Figures in which:
Fig. 1 is a schematic view of a thick film heater in accordance with the invention;
Fig. 1A is a sectional view along a radius of the heater of Fig. 1 showing the profile of the plate;
Fig. 2 is a table giving various data for the heater of Fig. 1;
Fig. 3a and 3b are plots of temperature across a diameter respectively of a known heater and one in accordance with the invention at a fixed time after dry-switch-on; and
Fig. 4 is a plot of deflection of the centre of the heater against time since dry-switch-on for a standard heater and a heater in accordance with the invention.

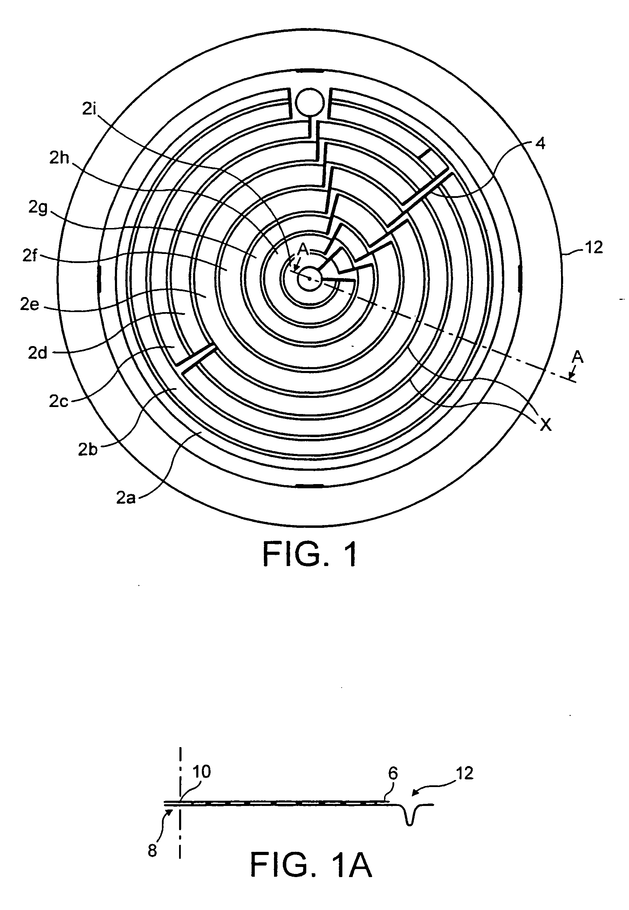

Turning to Fig. 1, there may be seen a thick film planar heater embodying the present invention. It may be seen from this Figure that the resistive heating track 2 is made up of a series of concentric arcuate track portions 2a-2i. The individual portions of tracks are connected electrically to each other with silver bridging portions 4. The total power of this heater is 750W at 240V AC. The track portions 2a-2i are provided on an insulating layer 6 about 85 microns thick which is deposited in a conventional manner on a 0.5mm thick stainless steel plate 8.

As can be seen from Fig. 1A, the plate 8 is generally planar in its central region 10, and is provided with a strengthening rim 12 around its periphery.

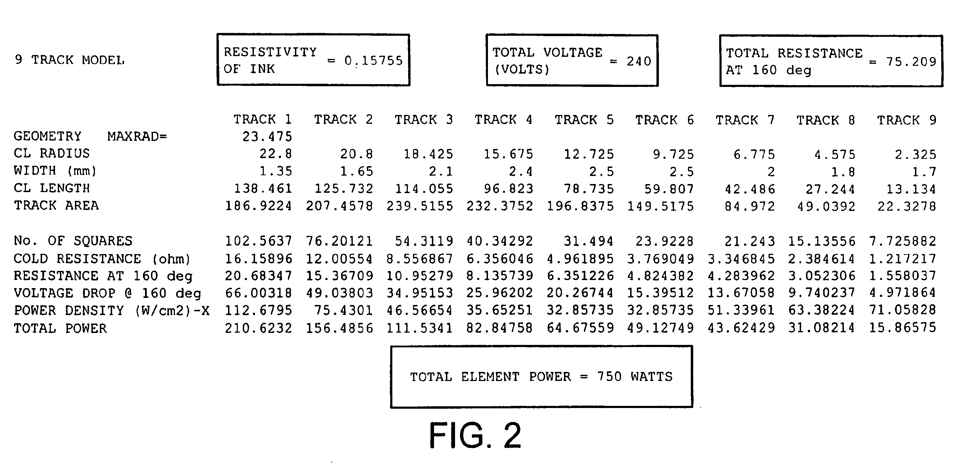

The widths of the track portions 2a-2i vary from the edge of the heater to its centre. In particular the outermost track portion 2a is the narrowest, the track width increasing towards the track portions 2e and 2f in the radially intermediate region, before decreasing again slightly towards the innermost track portion 2i. Since power density is inversely proportional to the track width, the power density decreases from a maximum at 2a to a minimum as 2e-2f and to a second, local maximum at 2i. The foregoing will be seen in greater detail from the data table for the heater in Fig. 2.

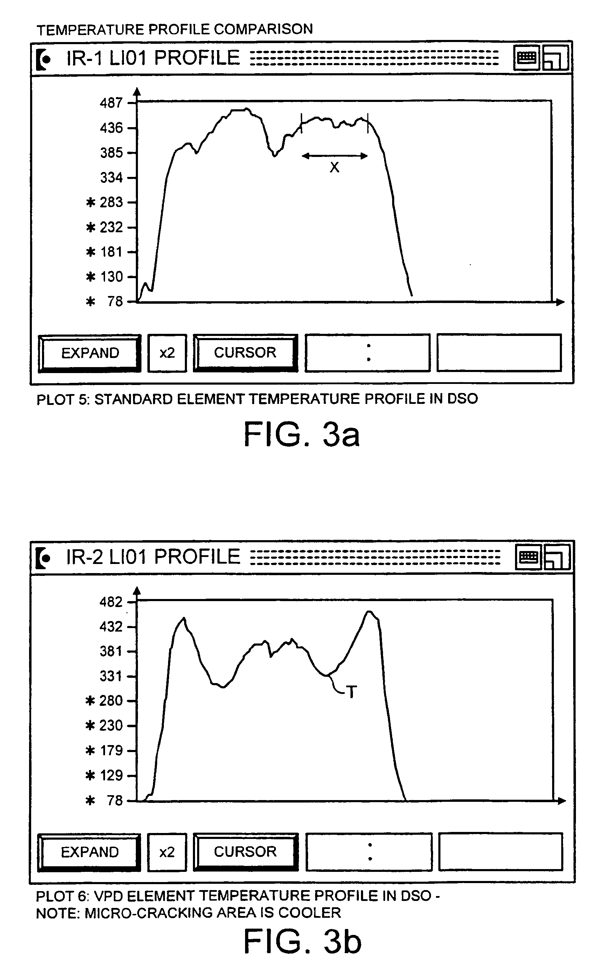

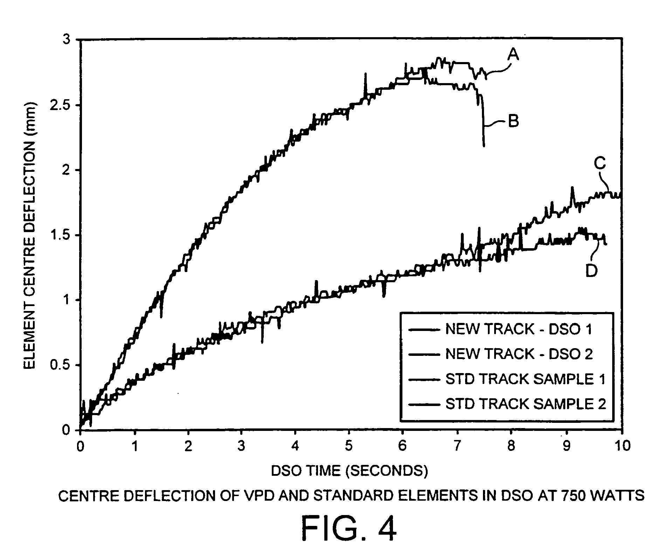

Tests were carried out on a heater produced to the design of Figs. 1 and 2, and also on a standard heater - that is to say one on which the track has a constant width across the heater - of the same power for comparison purposes. The results of these tests are shown in Figs 3a, 3b and 4. Fig. 3a is a temperature profile across the 'standard' plate after it had been switched on dry for 6 seconds. Fig. 3b shows the results of the same test applied to the heater in accordance with the invention. It will be seen that there is a marked difference in the temperature profiles.

Looking firstly at Fig. 3a showing the profile of the standard heater, it will be seen that the temperature at the centre of the plate (i.e. half way along the horizontal axis of Fig. 3a) is at a minimum by virtue of having no heating track thereon. The temperature rises generally to a broad maximum in the approximate radially intermediate region X, before falling away towards the edge of the plate. The highest temperatures and thus greatest mechanical tensile strains are found in the radially intermediate region which resulted in micro-cracking in this area.

By contrast however, the temperature profile of the heater in accordance with the invention shown at Fig. 3b exhibits a minimum temperature T at the radially intermediate region thereby avoiding micro-cracking at least during the 6 seconds for which the heaters were energised. A duration of 6 seconds was chosen for these tests since that is the upper limit of the time taken for a production heater to be switched off by a thermal protector. It will be seen that the temperature rises in one direction to a maximum towards the periphery of the heater and in the other direction to a local maximum towards the centre of the heater. The heater was examined after it had cooled down again and no micro-cracking was seen to have occurred.

Turning now to Fig. 4, there is shown a plot of the deflection of the centre of the heater against time for two standard heaters similar to those used in the test described above (plots A and B) and a repeated test for the heater in accordance with the invention made to the design set out in Figs 1 and 2. All of the tests were carried out under dry-switch-on conditions. It is immediately apparent from the plots that the deflection was significantly greater (by approximately a factor or two) in the case of the standard heaters. Moreover it will be seen that both standard heaters failed, with dangerous micro-cracking, at approximately 7.5 seconds after dry switch on; whereas the heater embodying the invention lasted well beyond this in both tests.

It will be appreciated by those skilled in the art that whilst a particular example of the invention has been described in detail, the concept is widely applicable to thick film heaters having a variety of patterns, not just those having a track formed of a series of concentric rings. Indeed, the heater need not even be circular but could be oval or any other suitable non-circular shape. Also whilst the invention has been demonstrated using a 750W heater, heaters with different powers, especially higher powers, may benefit from the application of the principles of the invention.

Also, deformation of the heater can be reduced mechanically for example by applying a spring force to eg the centre of the heated side of the heater. In the case of the heater discussed above, it has been found that a spring force of about 40N gives a satisfactory resistance to microcracking.

## Claims

1. A thick film heater having a generally planar metallic substrate, an electrically insulating layer (6) on said substrate, and a resistive heating track (2) applied to said insulating layer, said heating track being arranged such that there is a power density distribution comprising a higher power density in a peripheral region of the heater than at least a radially intermediate region thereof, such that said peripheral region runs at an elevated temperature as compared to said radially intermediate region, whereby in use tensile strain in at least selected areas of the insulating layer (6) of said heater is minimised.

2. A heater as claimed in claim 1 wherein the maximum power density is provided at the periphery of the heated area of the heater.

3. A heater as claimed in claims 1 or 2, wherein the heater comprises stiffening means around its periphery.

4. A thick film electric heater as claimed in claim 3, said heating track (2) being arranged such that a peripheral portion of the track has a sufficiently high power density that in the event that the heater is energised without being in contact with liquid, the temperature of said peripheral portion will be greater than a radially intermediate portion of the heater.

5. A heater as claimed in any preceding claim wherein the variation in power density is achieved by adjusting the widths of the heating track (2).

6. A heater as claimed in any preceding claim wherein the power density of the track (2) decreases continuously from the periphery of the heater towards its centre.

7. A heater as claimed in any of claims 1 to 5 wherein the power density decreases from the periphery to a radially intermediate region of the heater and then remains at a constant level into the centre of the heater.

8. A heater as claimed in any of claims 1 to 5 wherein the power density decreases from the periphery to an radially intermediate region and increases again towards the centre of the heater.

## Patentansprüche

1. Dickfilm-Heizgerät mit einem im Allgemeinen ebenen metallischen Substrat, einer elektrisch isolierenden Lage (6) auf dem Substrat und einer Widerstandsheizbahn (2), welche auf die isolierende Lage aufgetragen ist, wobei die Heizbahn derart angeordnet ist, dass eine Leistungsdichteverteilung vorhanden ist, welche in einem Umfangsbereich des Heizgerätes eine höhere Leistungsdichte als in wenigstens einem radial mittleren Bereich desselben umfasst, sodass der Umfangsbereich bei einer erhöhten Temperatur arbeitet, verglichen mit dem radial mittleren Bereich, wodurch im Gebrauch eine Zugbelastung in wenigstens ausgewählten Bereichen der isolierenden Lage (6) des Heizgeräts minimiert ist.

2. Heizgerät nach Anspruch 1, bei welchem die maximale Leistungsdichte am Umfang der beheizten Fläche des Heizgeräts bereitgestellt ist.

3. Heizgerät nach Anspruch 1 oder 2, bei welchem das Heizgerät Versteifungsmittel um seinen Umfang herum umfasst.

4. Elektrisches Dickfilm-Heizgerät nach Anspruch 3, wobei die Heizbahn (2) derart angeordnet ist, dass ein Umfangsabschnitt der Bahn eine ausreichend hohe Leistungsdichte aufweist, dass für den Fall, dass das Heizgerät ohne Kontakt zu einer Flüssigkeit mit Energie versorgt wird, die Temperatur des Umfangsabschnitts größer sein wird als eines radial mittleren Abschnitts des Heizgeräts.

5. Heizgerät nach einem der vorhergehenden Ansprüche, bei welchem die Variation der Leistungsdichte erreicht wird durch Einstellen der Breiten der Heizbahn (2).

6. Heizgerät nach einem der vorhergehenden Ansprüche, bei welchem die Leistungsdichte der Bahn (2) kontinuierlich vom Umfang des Heizgeräts zu seiner Mitte hin abnimmt.

7. Heizgerät nach einem der Ansprüche 1 bis 5, bei welchem die Leistungsdichte vom Umfang zu einem radial mittleren Bereich des Heizgeräts abnimmt und dann zur Mitte des Heizgeräts hin auf einem konstanten Niveau verbleibt.

8. Heizgerät nach einem der Ansprüche 1 bis 5, bei welchem die Leistungsdichte vom Umfang zu einem radial mittleren Bereich abnimmt und zur Mitte des Heizgeräts hin emeut zunimmt.

## Revendications

1. Elément chauffant à film mince, comprenant un substrat métallique globalement planaire, une couche (6) isolante à l'électricité sur ledit substrat, et une piste chauffante (2) résistante, appliquée sur ladite couche isolante, ladite piste de chauffage étant agencée de manière qu'il y ait une distribution de la densité de puissance comprenant une densité de puissance supérieure dans une région périphérique de l'élément chauffant à ce qu'elle est en au moins une région radialement intermédiaire de celui-ci, de manière que ladite région périphérique fonctionne à une température élevée par rapport à ladite région radialement intermédiaire, de manière que, en utilisation, la contrainte de traction en au moins des zones sélectionnées de la couche isolante (6) dudit élément chauffant soit minimisée.

2. Elément chauffant tel que revendiqué à la revendication 1, dans lequel la densité de puissance maximale est fournie à la périphérie de la zone chauffée de l'élément chauffant.

3. Elément chauffant tel que revendiqué à la revendication 1 ou 2, dans lequel l'élément chauffant comprend des moyens de renforcement autour de sa périphérie.

4. Elément chauffant électrique à film mince tel que revendiqué à la revendication 3, ladite piste chauffante (2) étant agencée de manière qu'une partie périphérique de la piste ait une densité de puissance suffisamment élevée pour que, dans l'éventualité où l'élément chauffant soit alimenté en énergie sans être en contact avec un liquide, la température de ladite partie périphérique soit supérieure à celle de la partie radialement intermédiaire de l'élément chauffant.

5. Elément chauffant tel que revendiqué à l'une quelconque des revendications précédentes, dans lequel la variation de la densité de puissance est obtenue par ajustement des largeurs de la piste chauffante (2).

6. Elément chauffant tel que revendiqué à l'une quelconque des revendications précédentes, dans lequel la densité de puissance de la piste (2) diminue de façon continue lorsqu'on va de la périphérie de l'élément chauffant vers son centre.

7. Elément chauffant tel que revendiqué à l'une quelconque des revendications 1 à 5, dans lequel la densité de puissance diminue en allant de la périphérie à une région radialement intermédiaire de l'élément chauffant, puis reste à un niveau constant au centre de l'élément chauffant.

8. Elément chauffant tel que revendiqué à l'une quelconque des revendications 1 à 5, dans lequel la densité de puissance diminue en allant de la périphérie à une région radialement intermédiaire, et augmente de nouveau en se rapprochant du centre de l'élément chauffant.
